# EUROPEAN PATENT SPECIFICATION

(11) **EP 2 450 544 B1**
(45) Date of publication and mention of the grant of the patent: **22.02.2017**
(21) Application number: 11188341.9
(22) Date of filing: 08.11.2011
(51) Int. Cl.: F01N 13/18, F16L 27/11

(54) **Improved compressible exhaust connection member**
Verbessertes komprimierbares Abgasverbindungselement
Élément amélioré de connexion d'échappement compressible

(30) Priority: 09.11.2010 US 942828
(43) Date of publication of application: 09.05.2012
(73) Proprietor: Tru-Flex, LLC, West Lebanon, IN 47991 (US)
(72) Inventor: Stalcup II, Robert, Franklin, Covington, IN Indiana 47932 (US); Swank, Scott, Robert, Williamsport, IN Indiana 47993 (US)
(74) Representative: Johnson, Lucy Elizabeth

(56) References cited:
- EP-A1- 0 493 680
- EP-A1- 0 974 741
- EP-A2- 0 797 039
- WO-A1-02/18755
- DE-U1- 20 312 251
- GB-A- 2 311 110

## Description

### BACKGROUND OF THE INVENTION

As is generally known, some automotive exhaust systems employ a flexible connection member or coupler disposed between two exhaust pipes in order to absorb undesirable vibrations input into the exhaust piping, absorb any thermal expansion or contraction of the exhaust piping, and compensate for any misalignments in the exhaust piping. These couplers are generally formed of a flexible metal bellows member and a braid cover surrounding the outer periphery of the bellows member. Exemplary of such a coupler is U.S. Patent No. 5,769,463 to Thomas. The couplers may also include an interlock hose member disposed within the bellows member. Exemplary of such a coupler is U.S. Patent No. 6,230,748 to Krawietz, et al. Similarly, EP0974741 "SJM Company Limited" describes a flexible tube of an exhaust pipe/coupler which utilises an isolating member positioned between the bellows member and an interlock to prevent abrasion and damage to the same.

The exhaust pipes, which are connected to each other by the coupler, often move and become misaligned with one another due to various circumstances, such as the flexing of the vehicle's frame as it traverses uneven terrain. Thus, a need exists from a coupler having improved flexibility and compressibility so as to absorb such movement and misalignment. Additionally, couplers having interlock hose members may become broken or damaged as a result of the coupler being excessively extended or compressed. Accordingly, a further need exists for a coupler having a means for limiting the extension or compression of the interlock hose member so that it will not become broken or damaged as a result of the coupler being extended or compressed too far.

The present invention involves the provision of an exhaust connection coupler and a method for manufacturing the same. The coupler may include a flexible bellows member, an axially extendable and contractible interlock member disposed within the bellows member and a braid cover surrounding the bellows member. According to the invention, the outer braid cover, by its nature, cannot extend or compress without changing diameter. The outer braid cover includes a cross-sectional circumference and an axial length and is constructed such that its circumference constricts radially as its length is extended axially. Such a design results in the outer braid cover becoming constricted against the bellows member when the coupler (and outer braid cover) is extended in length. This constriction against the bellows member serves to limit the amount in which the outer braid cover (and thus the coupler and its components, including the interlock member), may be extended in length. As assembled, the interlock member is at a nearly fully extended length when the bellows member is at a natural, uncompressed and unextended length. Such a design maximizes the amount in which the coupler may be compressed, as the interlock member can be the limiting factor dictating the extent to which the coupler can be compressed. The braid cover may be designed such that it provides resistance limiting the axial growth of the coupler while allowing maximum compression and angular flexibility during installation and use. The braid cover may be constructed of intertwined bundles of wire filaments disposed at a specified angle from a central axis of the coupler.

According to the invention, the coupler also includes an inner braid member disposed inwardly of the interlock member. Like the outer braid cover, the inner braid member, by its nature, cannot extend or compress without changing diameter. When the coupler is compressed in length axially, the inner braid member expands radially and becomes pressed against the interior of the interlock member. The interior of the interlock member prevents the inner braid member from expanding in diameter any further and thus limits how far the inner braid member (and consequently the coupler and its components, including the interlock member) may be compressed in length. Just as the outer braid cover provides resistance or restriction limiting the axial growth of the coupler, the inner braid member provides resistance or restriction limiting the axial compression of the coupler. The braid cover and braid member may work in tandem to ensure that the coupler will not be stretched or compressed too far thereby aiding to prevent premature failure of the components therein, including the interlock member and bellows member.

Other and further objects of the invention, together with the features of novelty appurtenant thereto, will appear in the course of the following description.

### DESCRIPTION OF THE SEVERAL VIEWS OF THE DRAWING

In the accompanying drawing, which forms a part of the specification and is to be read in conjunction therewith in which like reference numerals are used to indicate like or similar parts in the various views:
Fig. 1 is a side perspective view of an exhaust connection coupler in accordance with one embodiment of the present invention;
Fig. 2 is an exploded side perspective view of an exhaust connection coupler in accordance with one embodiment of the present invention;
Fig. 3 is an enlarged fragmentary cross-sectional side view of an exhaust connection coupler in an uncompressed, unextended state in accordance with one embodiment of the present invention;
Fig. 4 is an enlarged fragmentary cross-sectional side view of an exhaust connection coupler in a compressed state in accordance with one embodiment of the present invention;
Fig. 5 is an enlarged fragmentary cross-sectional side view of an exhaust connection coupler including an inner braid member in accordance with one embodiment of the present invention;
Fig. 6 is a side perspective view of an exhaust connection coupler in an angularly flexed orientation in accordance with one embodiment of the present invention; and
Fig. 7 is a partially enlarged view illustrating the manner and angle at which bundles of wire elements may be braided in order to form a cover member in accordance with one embodiment of the present invention.

### DETAILED DESCRIPTION OF THE INVENTION

The invention will now be described with reference to the drawing figures, in which like reference numerals refer to like parts throughout. For purposes of clarity in illustrating the characteristics of the present invention, proportional relationships of the elements have not necessarily been maintained in the drawing figures.

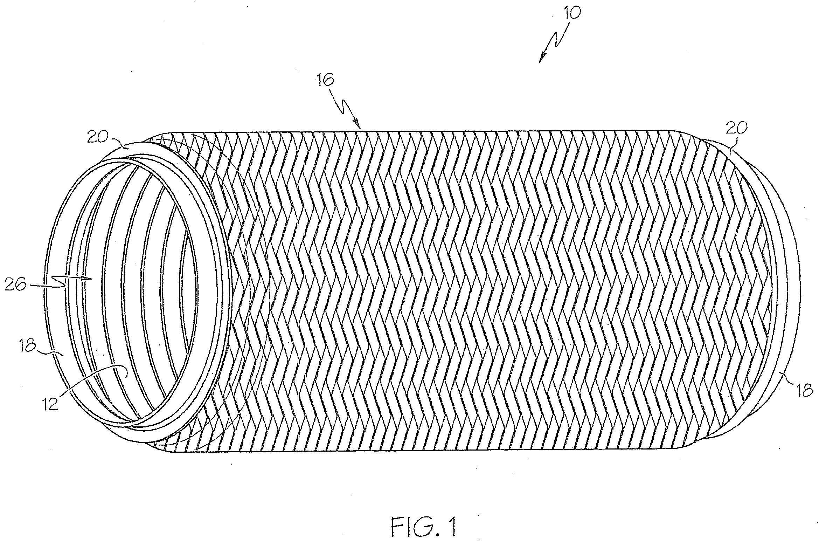

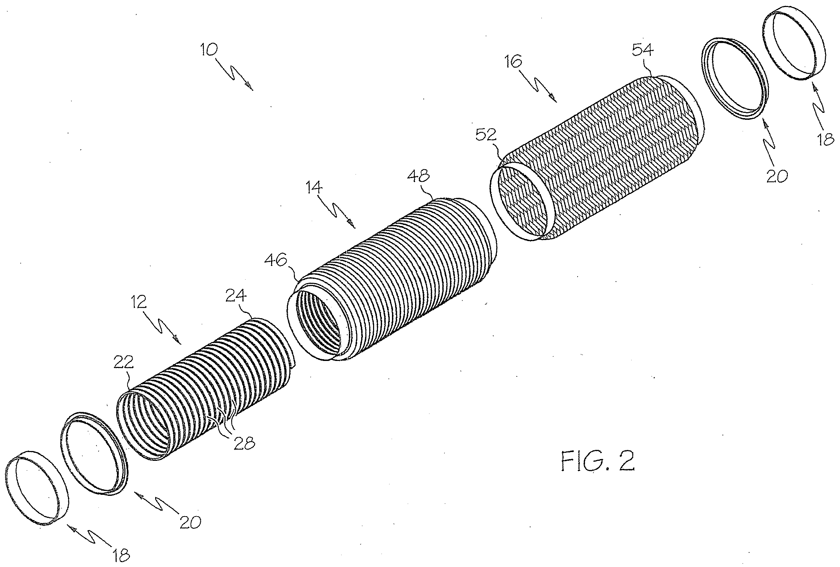

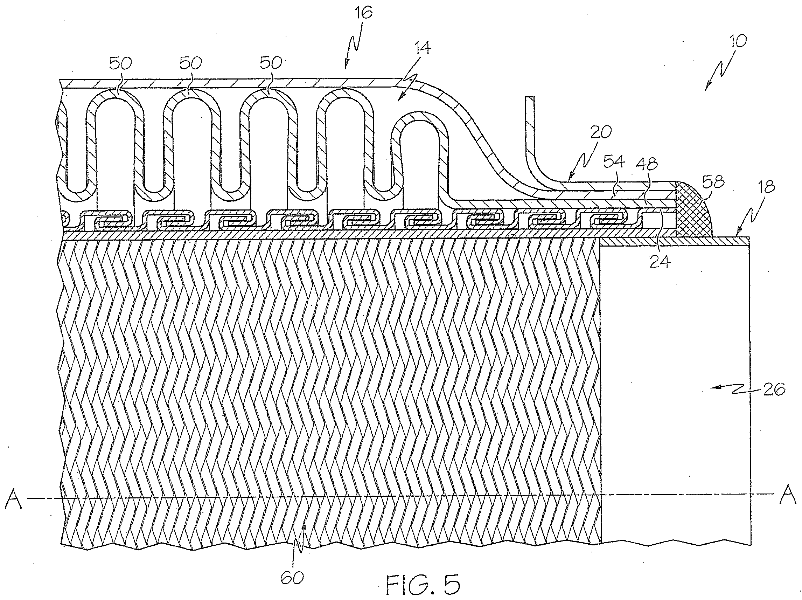

The present invention is directed generally toward an exhaust connection member or coupler 10 and a method for manufacturing the same. As illustrated in Figs. 1 and 2, the coupler 10 includes an interlock hose member 12, a flexible bellows member 14, a braid cover 16 surrounding the bellows member 14, end flanges 18, and end rings or collars 20 for securing the end parts of the interlock hose member 12, flexible bellows member 14 and braid cover 16 together. The interlock member 12 is disposed within the bellows member 14. The coupler 10 is flexible thereby serving to effectively absorb any linear thermal expansion and contraction of the exhaust piping to which the coupler 10 is connected, absorb undesirable vibrations input into the exhaust piping and compensate for misalignments in the exhaust piping. As shown in Fig. 5 and described in greater detail below, the coupler 10 may further include an interior braid member 60 disposed inwardly of the interlock member 12.

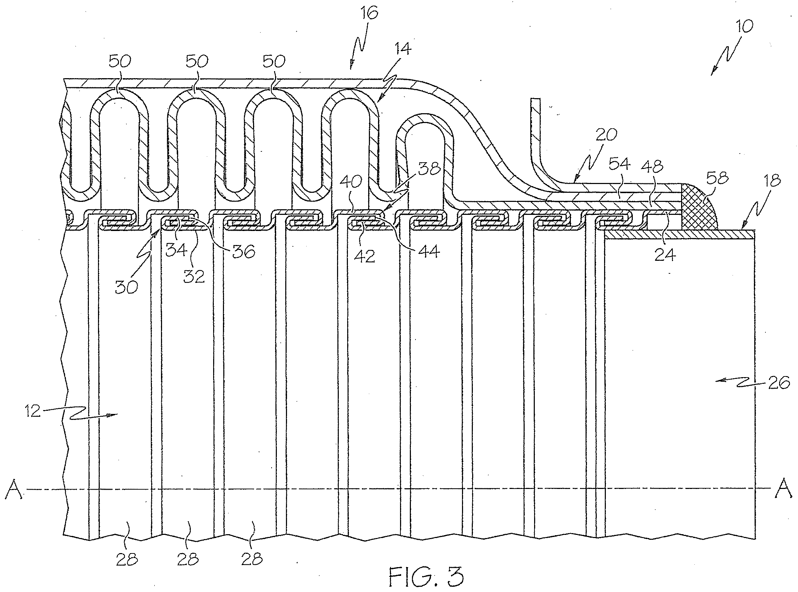

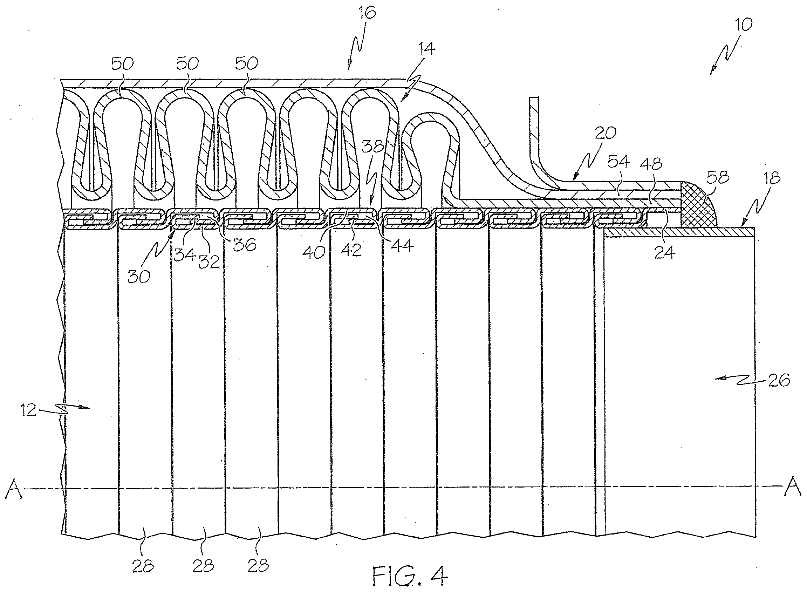

The interlock member 12 is generally flexible and able to accommodate relative movement between the exhaust piping (not shown). It is axially extendable and contractible. The interlock member 12 may be of a type generally known in the industry and may be constructed of a single spirally-wound, interlocking formed metal band 28 having interlocking leading and trailing ends 34 and 42. As depicted in Figs. 3 and 4, the band 28 is generally formed into an S-shaped configuration having first and second hook portions 30 and 38. The first hook portion 30 is comprised of a generally flat segment 32, a free end 34 and a gap 36 defined therebetween. Likewise, the second hook portion 38 is comprised of a generally flat segment 40, a free end 42 and a gap 44 defined therebetween. As illustrated, the first hook portion 30 of one band 28 interlocks with the second hook portion 38 of an adjacent band 28. The continuous spirally-wound, interlocking band 28 forms a generally cylindrical member having first and second ends 22 and 24. The interlock member 12 defines a passageway 26 through which the exhaust gases flow.

The bellows member 14, which is formed of a metallic material and is of a generally cylindrical shape, is comprised of first and second tube-like ends 46 and 48 with a plurality of repeating corrugations 50 extending therebetween. The bellows member 14 is also flexible thereby serving to effectively absorb any linear thermal expansion and contraction of the exhaust piping to which the coupler 10 is connected, absorb undesirable vibrations input into the exhaust piping and compensate for misalignments in the exhaust piping.

As depicted in the figures, the interlock member 12 may be disposed inwardly of the bellows member 14 so as to define a gap therebetween. In one embodiment, there is a circumferential air gap of approximately 1/8 inch between the interlock member 12 and bellows member 14. This gap provides insulation qualities and also permits relative motion and vibration between the interlock member 12 and bellows member 14 without the two creating rubbing against or creating friction between each other.

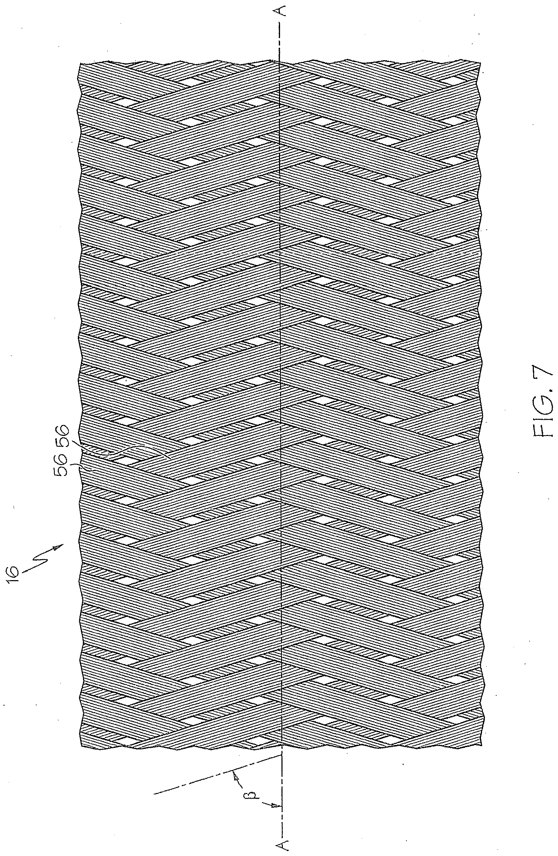

A braid cover 16 having first and second ends 52 and 54 surrounds an outer periphery
of the bellows member 14. The braid cover 16 serves to dampen vibrations, protect the bellows member 14 and provide resistance limiting axial growth of the coupler 10 while allowing for maximum compression and angular flexibility during installation and use. As shown in Fig. 7, braid member 16 is formed of a plurality of ribbon-like bundles 56 made up of parallel metallic wire filaments. In one embodiment, the bundles 56 are fashioned from a plurality of metal wire filaments that are generally in side-by-side contact with one another to form a substantially solid ribbon. The bundles 56 may be intertwined (e.g., interlaced, braided, knitted, woven, looped or the like) together on an elongated mandrel (not shown) to form a flexible, fabric-type generally cylindrical article.

The braid cover 16 is instrumental in providing resistance or restriction limiting the axial growth of the coupler 10, including the interlock member 12, while allowing for maximum compression and angular flexibility. This promotes prolonged life of the interlock member 12 by restricting it from being stretched too far and potentially breaking or being pulled apart. The construction of the braid cover 16, however, is such that it allows the coupler 10 to be compressed in length and angularly flexed. When compressed, the length of the coupler 10 may be reduced by a length of up to 25% or more of the coupler's 10 naturally uncompressed and unextended length. For example, in one embodiment, the coupler's 10 uncompressed, unextended length is about 12 inches while the coupler 10 has the ability to be compressed to a length of about 10 inches. In some cases, the interlock member 12 is the limiting factor keeping the coupler 10 from being compressed any further. As shown in Fig. 4, when the coupler 10 is fully compressed, the hook portions 30 and 38 of the interlock member 12 are bottomed out against one another.

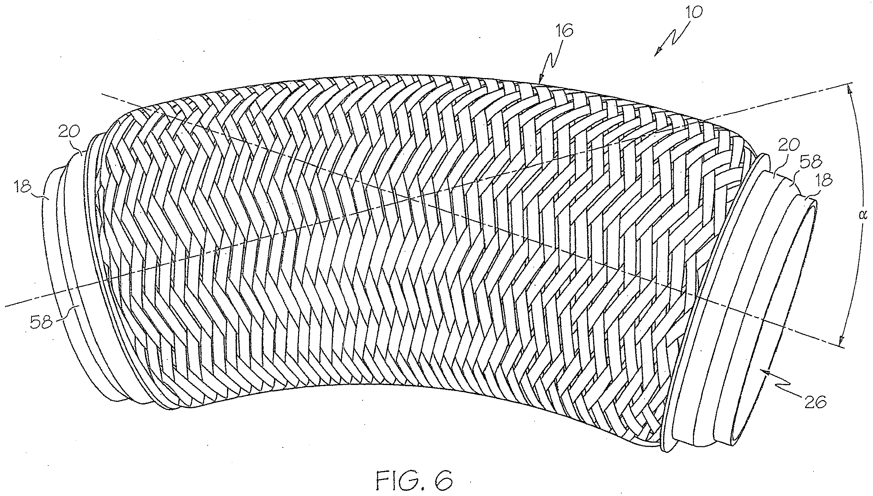

As discussed in further detail below, the interlock member 12 is at a nearly fully extended length when the coupler 10, including the bellows member 14, is in its natural uncompressed, unextended length. Such a design affords the coupler 10 the ability to maximize the amount in which it may be compressed because, as mentioned above, the interlock member 12 is may be the limiting factor dictating the extent to which the coupler 10 can be compressed. When the interlock member's 12 hook portions 30 and 38 become bottomed out against one another, like demonstrated in Fig. 4, the coupler 10 may not be compressed any further. This design also affords the coupler 10 a maximized flexibility. As illustrated in Fig. 6, the coupler 10 may be flexed such that it has an angular axial displacement. This is possible because one side of the coupler 10, including the interlock member 12, may be compressed while the other side remains less compressed, uncompressed or even slighted extended from its natural length. The coupler 10 may be axially flexed to an angle α of up to about 45° or more, and in one embodiment up to about 35°, as demonstrated in Fig. 6.

The construction of the braid cover 16, including the angle β at which its bundles 56 are intertwined, affords the braid cover 16 the ability to provide resistance or restriction limiting the coupler's 10 axial growth, while allowing for maximum compression and angular flexibility. As depicted in Fig. 7, the bundles 56 are braided or otherwise arranged at an angle β relative to a central axis A-A of the coupler 10. The angle β can be in a range from about 55° to 80°, and in one embodiment is in a range from about 65° to 75°. In one embodiment, the braid cover 16, by its nature, cannot extend or compress without changing in diameter. When the braid cover 16 is extended in length axially, its cross-sectional circumference constricts radially, and vice versa. As such, the braid cover is not unlike the toys commonly known as "Chinese handcuffs" or "finger-traps," which tend to constrict radially under axial tension.

As illustrated in the figures, the braid cover 16 is sleeved over the bellows member 14. When the coupler 10 is extended in length, the circumference of the braid cover 16 constricts radially and the braid cover 16 becomes constricted against the bellows member 14. The outer diameter of the bellows member 14 prevents the braid cover 16 from shrinking in diameter any further and thus limits how far the braid cover 16 (and consequently the coupler 10 and its components, including the interlock member 12) may be extended in length.

The combination of the interlock member 12 being at a nearly fully extended length when the bellows member 14 is in a natural uncompressed, unextended length, as described above, and the construction of the braid cover 16, enable the coupler 10 to have improved flexibility and compressibility.

As set forth above, the interlock member ends 22 and 24, the bellows member ends 46 and 48 and the braid cover ends 52 and 54 may be combined together, respectively, with a retainer. The retainer may be comprised of a support ring or end ring 20, a spot weld, a bead of weld 58, a clamping member, any suitable fastener, or any combination thereof. As best illustrated in Figs. 3 and 4, the retainer may also secure the ends 22, 24, 46, 48, 52 and 54 to an outer surface of the respective end flanges 18. As shown, the end rings 20 are fit on the end flanges 18 in such a manner as to sandwich the ends 22, 24, 46, 48, 52 and 54 between the end flanges 18 and end rings 20. As may be appreciated, the interlock member 12, the bellows member 14, the braid cover 16 and the end rings 20 may be integrally connected to each other by way of spot welds (not shown) or a bead of weld 58. The end rings 20 may further be secured to the flanges 18 by way of a weld 58 or other suitable attachment means. It should be understood, however, that the interlock member 12, bellows member 14 and braid cover 16 may be coupled with the flanges 18 or directly to the exhaust pipes by any suitable fastening means, including welding, clamping, riveting, bolting, screwing or the like.

Fig. 5 illustrates an embodiment of the coupler 10 similar to the one described above, but further including an inner braid member 60 disposed inwardly of the interlock member 12. The inner braid member 60 may serve to further dampen vibrations and provide resistance limiting axial compression of the coupler 10 while allowing for maximum extension and angular flexibility during installation and use. This promotes prolonged life of the interlock member 12 by restricting it from being compressed too far and potentially breaking or crimping its hook portions 30 and 38. Like the outer braid cover 16, the inner braid member 60 may be formed of a plurality of intertwined ribbon-like bundles made up of parallel metallic wire filaments. The angle at which the inner braid member 60 bundles are intertwined may be substantially similar to the angle β at which the outer braid cover bundles 56 are intertwined.

Like the outer braid cover 16, the inner braid member 60, by its nature, cannot extend or compress without changing diameter. Thus, when the inner braid member 60 is compressed in length axially, its circumference expands radially, and vice versa. As shown in Fig. 5, the braid member 60 is sleeved around the interior of the interlock member 12. When the coupler 10 is compressed in length axially, the braid member 60 expands radially and becomes pressed against the interior of the interlock member 12. The interior diameter of the interlock member 12 prevents the braid member 60 from expanding in diameter any further and thus limits how far the braid member 60 (and consequently the coupler 10 and all of its components, including the interlock member 12) may be compressed in length. Just as the outer braid cover 16 provides resistance or restriction limiting the axial growth of the coupler 10, the interior braid member provides resistance or restriction limiting the axial compression of the coupler 10. The braid cover 16 and braid member 60 may work in tandem to ensure that the coupler 10 will not be stretched or compressed too far thereby aiding to prevent premature failure of the components therein, including the interlock member 12 and bellows member 14.

It should be understood that one or both of the outer braid cover 12 and inner braid member 60 may be incorporated into a coupler 10 comprising one of more of a bellows member 14, an interlock member 12 or any combinations thereof. For example, in one embodiment, the coupler 10 may be comprised of a bellows member 14, an outer braid cover 16 disposed around the bellows member 14, and retainers coupling the ends parts of the bellows member 14 and outer braid cover 16 together. The coupler 10 need not include all of the components described here and may optionally only include one of either the inner braid member 60 or the outer braid cover 16. Other suitable combinations of the components described herein may also be utilized to form the coupler 10.

Turning attention now to the manner in which the coupler 10 is manufactured, the coupler 10 is an assembly of a number of components, including an interlock member 12 and a bellows member 14. The interlock member 12 is positioned within the bellows member 14. The ends 22 and 24 of the interlock member 12 are coupled with the ends 46 and 48 of the bellows member 14, respectively, such that when the bellows member 14 is at a natural uncompressed and unextended length, the interlock member 12 is generally at a nearly fully extended length. This is best illustrated in Fig. 3. As set forth above, the coupling of ends 22, 24, 46 and 48 may be achieved by a retainer which may be comprised of a support ring or end ring 20, a spot weld, a bead of weld 58, a clamping member, any suitable fastener, or any combination thereof. As demonstrated in Figs. 3 and 4, the interlock end 24 and bellows member end 48 may be positioned over an end flange 18. An end ring 20 may then be slid over the ends 24 and 48. Once the ends 24 and 48 are retained between the flange 18 and ring 20, the components may be retained together by a bead of weld 58, one or more spot welds, a clamp, any other suitable fastener or any combinations thereof.

The coupler 10 also includes a braid cover 16 surrounding an outer periphery of the bellows member 14. As set forth above, wire filaments formed into bundles 56, may be intertwined (e.g., interlaced, braided, knitted, woven, looped or the like) together on an elongated mandrel (not shown) to form a flexible, sleeve-like braid cover 16. The bundles 56 may be intertwined on the mandrel such that they are generally disposed of at an angle β relative to a central axis of the mandrel. As set forth above, the angle β can be in a range from about 55° to 80°, and in one embodiment is in a range from about 65° to 75°. Upon the formation of the braid cover 16, it may be assembled with the remainder of the coupler 10. As best shown in Figs. 3 and 4, the braid cover 16, like the interlock member 12 and bellows member 14, may be retained between the end flange 18 and end ring 20.

From the foregoing, it will be seen that this invention is one well adapted to attain all the ends and objects hereinabove set forth together with other advantages which are obvious and which are inherent to the structure. It will be understood that certain features and sub combinations are of utility and may be employed without reference to other features and sub combinations. This is contemplated by and is within the scope of the claims. Since many possible embodiments of the invention may be made without departing from the scope thereof, it is also to be understood that all matters herein set forth or shown in the accompanying drawings are to be interpreted as illustrative and not limiting.

In particular, the invention encompasses a coupler for use in an exhaust system, said coupler comprising:
a flexible bellows member made of metallic material and having a generally cylindrical and repeatedly corrugated shape and first and second ends; and
an interlock member disposed within said bellows member, said interlock member being axially extendable and contractible and having first and second ends;
wherein said first and second ends of said bellows member are coupled with said first and second ends of said interlock member, respectively;
wherein when said bellows member is at a natural uncompressed, unextended length, said interlock member is generally at a nearly fully extended length.

The coupler further comprises an outer braid cover surrounding said
bellows member, said outer braid cover having a cross-sectional
circumference that constricts radially as said outer braid member is extended in length axially, and said outer braid cover becoming constricted against said
bellows member when said outer braid cover is extended in length axially.

It may also encompass the coupler, wherein the constriction of said outer braid cover against said bellows member serves to limit the amount in which said outer braid cover and coupler may be extended in length axially.

It may also encompass the coupler, wherein said outer braid cover is comprised of a plurality bundles of metallic filaments, said bundles being intertwined such that said bundles are generally disposed at an angle between about 55° and 80° from a central axis of said coupler.

It may also encompass the coupler, wherein said bundles are generally disposed at an angle between about 65° and 75° from a central axis of said coupler.

It may also encompass the coupler, wherein said outer braid cover provides resistance limiting axial growth of said coupler while enabling compression and angular flexibility.

It may also encompass the coupler further comprising an inner braid member disposed around an interior of said interlock member.

It may also encompass the coupler, wherein said inner braid member has a cross-sectional circumference that expands radially as said inner braid member is compressed in length axially.

It may also encompass the coupler, wherein said inner braid member becomes pressed against said interior of said interlock member when said inner braid member is compressed in length axially.

It may also encompass the coupler, wherein the contact of said inner braid member against said interlock member serves to limit the amount in which said inner braid member and coupler may be compressed in length axially.

The constructions described above and illustrated in the drawings are presented by way of example only and are not intended to limit the concepts and principles of the present invention. Thus, there has been shown and described several embodiments of a novel invention. As is evident from the foregoing description, certain aspects of the present invention are not limited by the particular details of the examples illustrated herein, and it is therefore contemplated that other modifications and applications, or equivalents thereof, will occur to those skilled in the art. The terms "having" and "including" and similar terms as used in the foregoing specification are used in the sense of "optional" or "may include" and not as "required". Many changes, modifications, variations and other uses and applications of the present construction will, however, become apparent to those skilled in the art after considering the specification and the accompanying drawings. All such changes, modifications, variations and other uses and applications which do not depart from the scope of the invention are deemed to be covered by the invention which is limited only by the claims which follow.

## Claims

1. A coupler (10) for use in an exhaust system, said coupler comprising:
a flexible bellows member (14) made of metallic material and having a generally cylindrical and repeatedly corrugated shape;
an interlock member (12) disposed within said bellows member, said interlock member being axially extendible and contractible;
an outer braid cover (16) having a cross-sectional circumference that constricts radially as said outer braid cover is extended in length axially, said outer braid cover surrounding said bellows member in a manner such that said outer braid cover becomes constricted against said bellows member when said outer braid cover is extended in length axially; and
a retainer (20, 58) for combining end parts of said bellows member and outer braid cover,
**characterised in that** when said bellows member is at a natural uncompressed unextended length, said interlock member is generally at a nearly fully extended length.

2. The coupler of claim 1, wherein the constriction of said outer braid cover against said bellows member serves to limit the amount in which said outer braid cover and coupler may be extended in length axially.

3. The coupler of any of claims 1 or 2, wherein said outer braid cover is designed to provide resistance limiting axial growth of said coupler while enabling compression and angular flexibility.

4. The coupler of any of the previous claims, wherein said outer braid cover is comprised of a plurality of bundles of metallic filaments, said bundles being intertwined such that said bundles are generally disposed at an angle between about 65° and 75° from a central axis of said coupler.

5. The coupler of any of the previous claims, wherein said interlock member and includes end parts combined with said end parts of said bellows member and outer braid cover.

6. The coupler of claim 5, further comprising an inner braid member disposed around an interior of said interlock member.

7. The coupler of claim 6, wherein said inner braid member has a cross-sectional circumference that expands radially as said inner braid member is compressed in length axially.

8. The coupler of any of claims 6 or 7, wherein said inner braid member becomes pressed against said interior of said interlock member when said inner braid member is compressed in length axially.

9. The coupler of any of claims 6 to 8, wherein the contact of said inner braid member against said interlock member serves to limit the amount in which said inner braid member and coupler may be compressed in length axially.

10. A method of manufacturing a coupler (10) for use in an exhaust system, said method comprising the steps of:
providing a flexible bellows member (14) having first and second ends;
providing an interlock member (12) having first and second ends;
positioning said interlock member within said bellows member; and
coupling said first and second ends of said bellows member with said first and second ends of said interlock member, respectively, such that when said ends are coupled, said bellows member is at a natural uncompressed, unextended length and said interlock member is generally at a nearly fully extended length.

11. The method of claim 10 further comprising the steps of providing an outer braid cover (16) and positioning said outer braid cover around said bellows member.

12. The method of claim 11, wherein said outer braid cover is designed to provide resistance limiting axial growth of said coupler while enabling compression and angular flexibility.

13. The method of claims 11 or 12 further comprising the steps of providing an inner braid member and positioning said inner braid cover around an interior of said interlock member.

14. The method of claim 13, wherein said inner braid member is designed to provide resistance limiting axial compression of said coupler while enabling extension and angular flexibility.

## Patentansprüche

1. Ein Koppler (10) zur Verwendung in einem Auspuffsystem, wobei der Koppler Folgendes beinhaltet:
ein flexibles Faltenbalgelement (14), das aus einem metallischen Material hergestellt ist und eine im Allgemeinen zylindrische und wiederholt gewellte Form aufweist;
ein Verriegelungselement (12), das innerhalb des Faltenbalgelements angeordnet ist, wobei das Verriegelungselement axial ausdehnbar und zusammenziehbar ist;
eine äußere Geflechtabdeckung (16), die einen Querschnittsumfang aufweist, der radial einschränkt, wenn die äußere Geflechtabdeckung der Länge nach axial ausgedehnt wird, wobei die äußere Geflechtabdeckung das Faltenbalgelement derart umgibt, dass die äußere Geflechtabdeckung gegenüber dem Faltenbalgelement eingeschränkt ist, wenn die äußere Geflechtabdeckung der Länge nach axial ausgedehnt wird; und
einen Halter (20, 58) zum Kombinieren von Endteilen des Faltenbalgelements und der äußeren Geflechtabdeckung,
**dadurch gekennzeichnet, dass**, wenn das Faltenbalgelement eine natürliche unkomprimierte, nicht ausgedehnte Länge aufweist, das Verriegelungselement eine im Allgemeinen fast vollständig ausgedehnte Länge aufweist.

2. Koppler gemäß Anspruch 1, wobei die Einschränkung der äußeren Geflechtabdeckung gegenüber dem Faltenbalgelement dazu dient, das Ausmaß, um welches die äußere Geflechtabdeckung und der Koppler der Länge nach axial ausgedehnt werden können, begrenzt.

3. Koppler gemäß einem der Ansprüche 1 oder 2, wobei die äußere Geflechtabdeckung konzipiert ist, um Widerstand bereitzustellen, welcher die axiale Vergrößerung des Kopplers begrenzt, während Kompression und Winkelflexibilität ermöglicht werden.

4. Koppler gemäß einem der vorhergehenden Ansprüche, wobei die äußere Geflechtabdeckung aus einer Vielzahl von Bündeln aus Metallfilamenten zusammengesetzt ist, wobei die Bündel derart verflochten sind, dass die Bündel im Allgemeinen mit einem Winkel zwischen etwa 65° und 75° von einer zentralen Achse des Kopplers angeordnet sind.

5. Koppler gemäß einem der vorhergehenden Ansprüche, wobei das Verriegelungselement Endteile umfasst, die mit den Endteilen des Faltenbalgelements und der äußeren Geflechtabdeckung kombiniert sind.

6. Koppler gemäß Anspruch 5, der weiter ein inneres Geflechtelement beinhaltet, das um eine Innenseite des Verriegelungselements angeordnet ist.

7. Koppler gemäß Anspruch 6, wobei das innere Geflechtelement einen Querschnittsumfang aufweist, der radial wächst, während das innere Geflechtelement der Länge nach axial komprimiert wird.

8. Koppler gemäß einem der Ansprüche 6 oder 7, wobei das innere Geflechtelement gegen die Innenseite des Verriegelungselements gedrückt wird, wenn das innere Geflechtelement der Länge nach axial komprimiert wird.

9. Koppler gemäß einem der Ansprüche 6 bis 8, wobei der Kontakt des inneren Geflechtelements mit dem Verriegelungselement dazu dient, das Ausmaß, um welches das innere Geflechtelement und der Koppler der Länge nach axial komprimiert werden können, begrenzt.

10. Ein Verfahren zur Herstellung eines Kopplers (10) zur Verwendung in einem Auspuffsystem, wobei das Verfahren die folgenden Schritte beinhaltet:
Bereitstellen eines flexiblen Faltenbalgelements (14), das ein erstes und ein zweites Ende aufweist;
Bereitstellen eines Verriegelungselements (12), das ein erstes und ein zweites Ende aufweist;
Positionieren des Verriegelungselements innerhalb des Faltenbalgelements; und
Koppeln des ersten und des zweiten Endes des Faltenbalgelements mit dem ersten bzw. dem zweiten Ende des Verriegelungselements, sodass, wenn die Enden verkoppelt sind, das Faltenbalgelement eine natürliche unkomprimierte, nicht ausgedehnte Länge aufweist und das Verriegelungselement eine im Allgemeinen nahezu vollständig ausgedehnte Länge aufweist.

11. Verfahren gemäß Anspruch 10, das weiter die Schritte des Bereitstellens einer äußeren Geflechtabdeckung (16) und des Positionierens der äußeren Geflechtabdeckung um das Faltenbalgelement herum beinhaltet.

12. Verfahren gemäß Anspruch 11, wobei die äußere Geflechtabdeckung konzipiert ist, um Widerstand bereitzustellen, welcher die axiale Vergrößerung des Kopplers begrenzt, während Kompression und Winkelflexibilität ermöglicht werden.

13. Verfahren gemäß den Ansprüchen 11 oder 12, das weiter die Schritte des Bereitstellens eines inneren Geflechtelements und des Positionierens der inneren Geflechtabdeckung um eine Innenseite des Verriegelungselements herum beinhaltet.

14. Verfahren gemäß Anspruch 13, wobei das innere Geflechtelement konzipiert ist, um Widerstand bereitzustellen, welcher die axiale Kompression des Kopplers begrenzt, während Ausdehnung und Winkelflexibilität ermöglicht werden.

## Revendications

1. Un coupleur (10) pour une utilisation dans un système d'échappement, ledit coupleur comprenant:
un organe de soufflet flexible (14) réalisé en matière métallique et ayant une forme généralement cylindrique et ondulée de façon répétée ;
un organe de verrouillage réciproque (12) disposé au sein dudit organe de soufflet, ledit organe de verrouillage réciproque pouvant s'étendre et se contracter de façon axiale ;
un couvercle en tresse externe (16) ayant une circonférence en coupe transversale qui se resserre de façon radiale à mesure que ledit couvercle en tresse externe est étendu en longueur de façon axiale, ledit couvercle en tresse externe entourant ledit organe de soufflet d'une manière telle que ledit couvercle en tresse externe se resserre contre ledit organe de soufflet lorsque ledit couvercle en tresse externe est étendu en longueur de façon axiale ; et
un dispositif de retenu (20, 58) pour combiner les parties d'extrémité desdits organe de soufflet et couvercle en tresse externe,
**caractérisé en ce que**, lorsque ledit organe de soufflet adopte une longueur non comprimée et non étendue naturelle, ledit organe de verrouillage réciproque adopte généralement une longueur presque pleinement étendue.

2. Le coupleur de la revendication 1, dans lequel le resserrement dudit couvercle en tresse externe contre ledit organe de soufflet sert à limiter le degré auquel lesdits couvercle en tresse externe et coupleur peuvent être étendus en longueur de façon axiale.

3. Le coupleur de n'importe lesquelles de la revendication 1 ou de la revendication 2, dans lequel ledit couvercle en tresse externe est conçu pour fournir une résistance limitant la croissance axiale dudit coupleur tout en permettant la compression et la flexibilité angulaire.

4. Le coupleur de n'importe lesquelles des revendications précédentes, dans lequel ledit couvercle en tresse externe est composé d'une pluralité de faisceaux de filaments métalliques, lesdits faisceaux étant entrelacés de telle sorte que lesdits faisceaux soient généralement disposés à un angle d'environ 65° à 75° par rapport à l'axe central dudit coupleur.

5. Le coupleur de n'importe lesquelles des revendications précédentes, dans lequel ledit organe de verrouillage réciproque inclut des parties d'extrémité combinées auxdites parties d'extrémité desdits organe de soufflet et couvercle en tresse externe.

6. Le couvercle de la revendication 5, comprenant en outre un organe en tresse interne disposé autour d'un intérieur dudit organe de verrouillage réciproque.

7. Le coupleur de la revendication 6, dans lequel ledit organe en tresse interne a une circonférence en coupe transversale qui s'étend de façon radiale à mesure que ledit organe en tresse interne est comprimé en longueur de façon axiale.

8. Le coupleur de n'importe lesquelles de la revendication 6 ou de la revendication 7, dans lequel ledit organe en tresse interne est comprimé contre ledit intérieur dudit organe de verrouillage réciproque lorsque ledit organe en tresse interne est comprimé en longueur de façon axiale.

9. Le coupleur de n'importe lesquelles des revendications 6 à 8, dans lequel le contact entre ledit organe en tresse interne et ledit organe de verrouillage réciproque sert à limiter le degré auquel lesdits organe en tresse interne et coupleur peuvent être comprimés en longueur de façon axiale.

10. Une méthode de fabrication d'un coupleur (10) pour une utilisation dans un système d'échappement, ladite méthode comprenant les étapes consistant à :
fournir un organe de soufflet flexible (14) ayant des première et deuxième extrémités ;
fournir un organe de verrouillage réciproque (12) ayant des première et deuxième extrémités ;
positionner ledit organe de verrouillage réciproque au sein dudit organe de soufflet ; et
coupler lesdites première et deuxième extrémités dudit organe de soufflet avec lesdites première et deuxième extrémités dudit organe de verrouillage réciproque, respectivement, de telle sorte que, lorsque lesdites extrémités sont couplées, ledit organe de soufflet adopte une longueur non comprimée et non étendue naturelle et que ledit organe de verrouillage réciproque adopte généralement une longueur presque pleinement étendue.

11. La méthode de la revendication 10 comprenant en outre les étapes consistant à fournir un couvercle en tresse externe (16) et à positionner ledit couvercle en tresse externe autour dudit organe de soufflet.

12. La méthode de la revendication 11, dans laquelle ledit couvercle en tresse externe est conçu pour fournir une résistance limitant la croissance axiale dudit coupleur tout en permettant la compression et la flexibilité angulaire.

13. La méthode de la revendication 11 ou de la revendication 12 comprenant en outre les étapes consistant à fournir un organe en tresse interne et à positionner ledit couvercle en tresse interne autour d'un intérieur dudit organe de verrouillage réciproque.

14. La méthode de la revendication 13, dans laquelle ledit couvercle en tresse interne est conçu pour fournir une résistance limitant la compression axiale dudit coupleur tout en permettant l'extension et la flexibilité angulaire.
